# EUROPEAN PATENT APPLICATION

(11) **EP 1 111 496 A1**
(43) Date of publication of application: **27.06.2001**
(21) Application number: 99926908.7
(22) Date of filing: 02.07.1999
(51) Int. Cl.: G06F 3/00, G01C 21/00

(54) **ELECTRONIC PROCESSOR WITH MENU INTERFACE**

(30) Priority: 15.07.1998 JP 20023798
(71) Applicant: FUJITSU LIMITED, Kawasaki-shi, Kanagawa 211-8588 (JP); FUJITSU TEN LIMITED, Kobe-shi, Hyogo 652-8510 (JP)
(72) Inventor: TAKAYAMA, Kuniharu, Fujitsu Limited, Kawasaki-shi, Kanagawa 211-8588 (JP); NAITO, Hirohisa, Fujitsu Limited, Kawasaki-shi, Kanagawa 211-8588 (JP); SEKIGUCHI, Minoru, Fujitsu Limited, Kawasaki-shi, Kanagawa 211-8588 (JP); MAEDA, Yoshiharu, Fujitsu Limited, Kawasaki-shi, Kanagawa 211-8588 (JP); INOUE, Noriaki, Fujitsu Ten Limited, Kobe-shi, Hyogo 652-8510 (JP); NAKAHIRA, Toshikazu, Fujitsu Ten Limited, Kobe-shi, Hyogo 652-8510 (JP); MATSUMOTO, Yasuo, Fujitsu Ten Limited, Kobe-shi, Hyogo 652-8510 (JP)
(74) Representative: Stebbing, Timothy Charles
(86) International application number: JP9903589
(87) International publication number: WO0004438

(57) **Abstract**

A regular menu item arrangement is made available to a user by providing a hierarchy menu including a layer from which an object is selected and a layer from which a predicate is selected, leading to an improvement in operability. The layer of the object menu and layer of the predicate menu may be respectively made higher and lower in a hierarchy, or vice versa. Both of the menus may be switched.

Additionally, menu items of a plurality of hierarchies are combined into one item according to a use history, etc., and the combined item is provided as an item of a higher-level hierarchical menu, so that a high-speed input is realized and operability is improved.

Furthermore, menu items are varied according to the attributes of a user, such as age, gender, etc., thereby improving operability.

## Description

### Technical Field

The present invention relates to an electronic processing device having a menu interface, and more particularly, to an electronic processing device having a menu interface which displays an easy-to-use menu.

### Background Art

An electronic processing device performing an interaction process is configured to display a menu, and to perform a process corresponding to an item (menu item) selected from the menu in many cases. For an electronic processing device displaying such a menu, an easy-to-use interface must be implemented by displaying an easy-to-use menu.

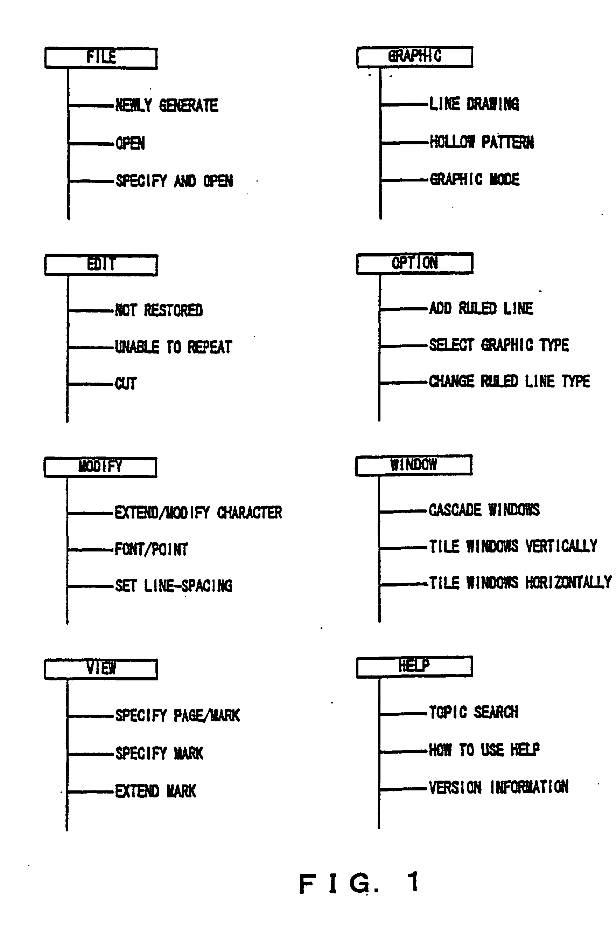

Fig. 1 explains a conventional technique. The menu shown in Fig. 1 is configured hierarchically. This menu displays "File", "Edit", "Modify", "Display", "Graphic", "Option", "Window", and "Help" as the menu items of a higher-level hierarchy. If "File" is selected from this menu, "Newly generate", "Open", "Specify and open", etc. are displayed as the menu items of a lower-level hierarchy. Or, if "Edit" is selected, "Not restored", "Unable to repeat", "Cut", etc. are displayed as the menu items of the lower-level hierarchy of the "Edit" menu.

As described above, the menu according to the conventional technique has no particular regularity in arranging menu items. In the above described example, menu items corresponding to nouns "File", "Graphic", etc., and those corresponding to verbs "Edit", "Modify", etc. are mixed and displayed in one hierarchy on the menu screen.

Because the conventional menu has no particular regularity in arranging menu items as described above, users frequently feel the inconvenience of operations using the menu. For example, if a user desires to edit a file, it is difficult to determine whether "File" or "Edit" must be first selected in the above described menu. Additionally, it is difficult to grasp the entire structure of the conventional menu. Furthermore, since the depths or the hierarchical levels of respective menu items are not even in the conventional menu, operations for many hierarchical menus are required depending on a process to be executed.

If the menu according to the conventional technique is used, a frequently used process, a process to be performed in a hurry, such as an emergency stop of a system, etc. cannot immediately be executed. Assuming that a "Tile windows horizontally" process is requested, "Window" is selected from a higher-level hierarchical menu, and "Tile windows horizontally" must be selected from the lower-level hierarchical menu of "Window". That is, menu items must be selected from hierarchical menus in order while opening the hierarchical menus from higher levels one by one.

As described above, even a frequently used process, a process to be executed in a hurry, etc. cannot immediately be performed with the conventional menu, leading to an inconvenience.

Additionally, the menu according to the conventional technique is not customized for each user. Namely, a Human-machine interface that is customized for each user is not provided. For example, the same menu is displayed regardless of whether a male or a female uses the menu.

As described above, it can hardly be said that a sufficiently easy-to-use menu is conventionally provided, and there are many respects to be improved so as to enhance user operability.

### Disclosure of Invention

The present invention aims at providing an electronic processing device having a menu interface which displays an easy-to-use menu.

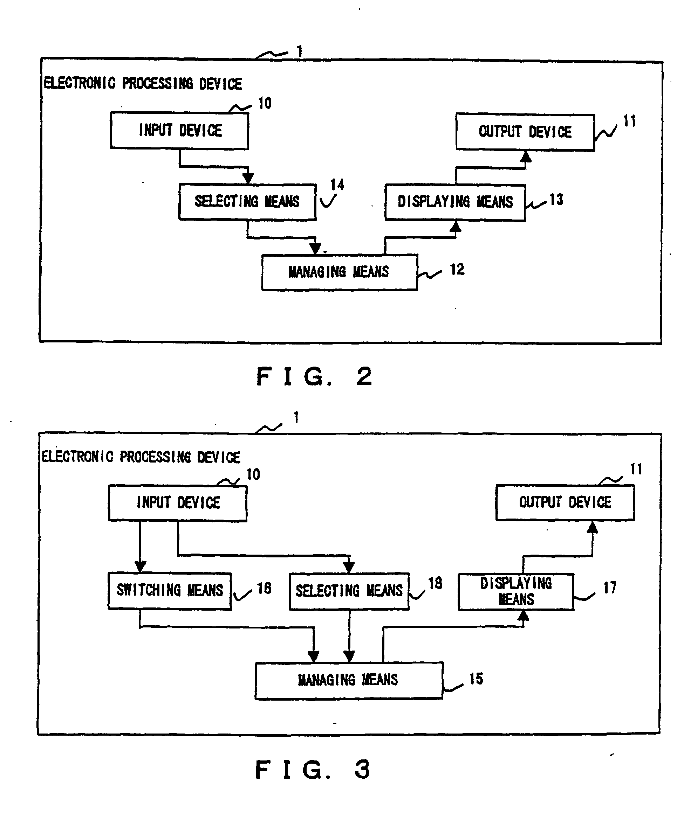

Figs. 2 through 5 are block diagrams explaining the principle of the present invention. Electronic processing devices 1 shown in these figures execute a predetermined process while displaying a menu.

The electronic processing device 1 shown in Fig. 2 comprises an input device 10, an output device 11, amanagingmeans 12, a displayingmeans 13, and a selecting means 14. The input device 10 receives instructions from a user or other devices. The selecting means 14 selects a menu item displayed on the output device 11 according to the instruction accepted by the input device 10.

The managing means 12 manages an object menu having one or more objects as selectable menu items, and a predicate menu having one or more predicates as selectable menu items. Here, if the object menu is defined to be a higher-level hierarchy, one or more predicates corresponding to the objects that belong to the object menu belong to the predicate menu. In the meantime, if the predicate menu is defined to be a higher-level hierarchy, one or more objects corresponding to the predicates that belong to the predicate menu belong to the object menu. The displaying means 13 displays the menu managed by the managing means 12 on the output device 11. The output device 11 displays the menu according to the instruction of the displaying means.

In the above described configuration, the displaying means 13 displays the object menu according to the management made by the managing means 12, and displays the predicate corresponding to a selected object if it is selected from the object menu by the selecting means 14. Or, the displaying means 13 displays the predicate menu according to the management made by the managing means 12, and displays the object corresponding to a selected predicate if it is selected from the predicate menu by the selecting means 14.

Since the electronic processing device 1 shown in Fig. 2 displays a menu according to the relationship of "an object to a predicate", or the relationship of "a predicate to an object" as described above, the entire structure of the menu can be grasped with ease. In addition, the operations are made uniform, and the hierarchies of menus are made even, so that an easy-to-use menu can be realized.

The electronic processing device 1 shown in Fig. 3 comprises an input device 10, an output device 11, a managing means 15, a switching means 16, a displaying means 17, and a selecting means 18. The managing means 15 manages a first and a second menu configuration. The first menu configuration is a configuration where an object menu having one or more objects as menu items is a higher-level hierarchy, while a predicate menu having one or more predicates as menu items is a lower-level hierarchy of the object menu. Here, the one or more predicates belonging to the predicate menu are arranged in correspondence with the one or more objects belonging to the object menu. The second menu configuration is a configuration where a predicate menu having one or more predicates as menu items is a higher-level hierarchy, while an object menu having one or more objects as menu items is a lower-level hierarchy of the predicate menu. Here, the one or more objects belonging to the object menu are arranged in correspondence with the one or more predicates belonging to the predicate menu.

The switching means 16 instructs a first display mode or a second display mode according to the instruction fromthe input device 10. The first displaymode displays the above described first menu configuration, while the second display mode displays the above described second menu configuration. The displaying means 17 displays a menu on the output device 11 according to the display mode instructed by the switching means 16. The selecting means 18 selects a menu item from the menu displayed on the output device 11 according to the instruction from the input device 10.

As described above, in the electronic processing device 1 shown in Fig. 3, the displaying means 17 displays the object menu, when the first display mode is selected by the switchingmeans 16. If a certain object is selected from the object menu by the selecting means 18, the displaying means 17 displays the predicate corresponding to the selected object. On the other hand, when the second display mode is selected by the switching means 16, the displaying means 17 displays the predicate menu. If a certain predicate is selected from the predicate menu by the selecting means 17, the displaying means 17 displays the object corresponding to the selected predicate.

As described above, with the electronic processing device shown in Fig. 3, the menus configured by the relationship of "an object to a predicate" and the relationship of "a predicate to an object" are prepared, and an arbitrary one of the menus is displayed according to the instruction from the input device 10. Accordingly, a user can select his or her desired one of the menus starting from an object or a predicate, when the user desires to perform a certain operation. As a result, an easy-to-use menu for the user can be realized.

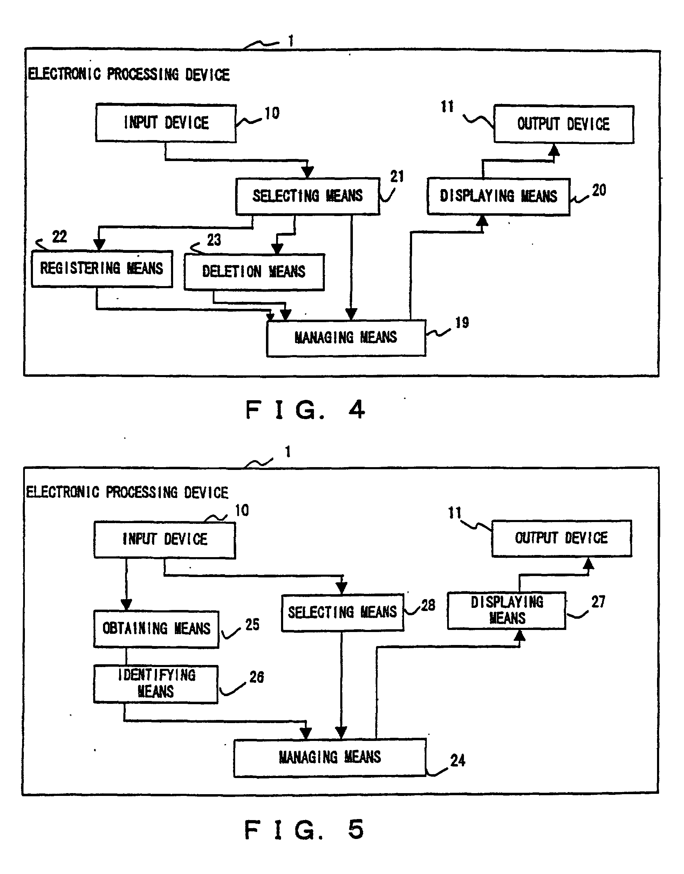

The electronic device shown in Fig. 4 comprises an input device 10, an output device 11, a managing means 19, a displaying means 20, a selecting means 21, a registering means 22, and a deleting means 23. The managing means 19 manages the menu data defining the configuration of a hierarchical menu. The displaying means 20 displays a menu on the output device 11 according to the menu data managed by the managing means 19. The selecting means 21 selects menu items from a plurality of hierarchical menus one by one according to the instruction from the input device 10.

The registering means 22 registers a new menu item defined by a combination of a plurality of menu items selected by the selecting means 21. The deleting means 23 deletes the menu item registered by the registering means 22 from the managing means 19.

If menu items are selected from a plurality of hierarchical menus by the selecting means 21, the registering means 22 determines whether or not the menu item defined by the combination of the selected menu items must be registered to the managing means 19 according to an interaction process or the attributes of the menu items. If the registering means 22 determines that the new menu item must be registered, it registers this menu item to the managing means 10. The deleting means 23 determines whether or not the menu item registered by the registering means 22 must be deleted from the managing means 10. If the deleting means determines that the menu item registered by the registering means 22 must be deleted, it deletes this menu item from the managing means 19. Note that the instruction from a user or a different device is given to the registering means 22 or the deleting means 23 via the input device 10 and the selecting means 21 in the above described interaction process.

As described above, with the electronic processing device shown in Fig. 4, the menu items for the execution of a desired process can be selected with just one operation. Namely, the menu items, which were conventionally specified by the operations for selecting menu items from respective hierarchies while sequentially opening the hierarchical menus, can be specified with just one operation by using the method according to the present invention.

The electronic processing device 1 shown in Fig. 5 comprises an input device 10, an output device 11, a managing means 24, an obtaining means 25, an identifying means 26, a displaying means 27, and a selecting means 28. The managing means 24 manages menu data defining the configuration of the menu corresponding to the category to which each user belongs. The obtaining means 25 obtains the category to which each user belongs. The identifying means 26 identifies the menu configuration corresponding to the category obtained by the obtaining means 25. The displaying means 27 displays the menu identified by the identifying means 26 on the output device 11. The selecting means 28 selects a desired menu item from the menu displayed on the output device 11 according to the instruction from the input device 10.

If a category to which a user belongs is obtained by the obtaining means 25 in the above described configuration, the identifying means 26 identifies the menu configuration corresponding to the category obtained by the obtaining means 25. Then, the displaying means 27 displays the menu corresponding to the category to which the user belongs on the output device 11 based on the identification made by the identifying means 26.

As described above, with the electronic processing device shown in Fig. 5, menus that are customized for each user can be displayed, so that an interface suitable for each user is provided.

### Brief description of the Drawings

Fig. 1 explains a conventional technique;
Figs. 2 to 5 are block diagrams showing the principle of the present invention;
Fig. 6 is a block diagram showing the configuration of an electronic processing device to which the present invention is applied;
Fig. 7 explains a menu structure;
Figs. 8 and 9 exemplify the configuration of a menu used in a car navigation system;
Figs. 10A, 10B, 11A, and 11B exemplify a menu screen;
Figs. 12 and 13 exemplify a program describing the processes displaying a menu;
Fig. 14 shows the menu data for the menu shown in Fig. 10A;
Fig. 15 is a flowchart showing the process displaying a menu;
Fig. 16 shows the menu data for the menu shown in Fig. 10B;
Fig. 17 shows the menu data for the menu shown in Fig. 11A;
Fig. 18 shows menu data for the menu shown in Fig. 11B;
Fig. 19 is a flowchart showing the process for displaying a menu;
Figs. 20 and 21 exemplify the menu having a display mode switching capability;
Figs. 22 and 23 show the respective menu data for the menus shown in Figs. 20 and 21;
Fig. 24 explains the capabilities of a menu customizing unit;
Fig. 25 explains the registration process performed by the menu customizing unit;
Fig. 26 explains the process registering a function corresponding to a newly generated menu item;
Fig. 27 explains another example of the registration process performed by the menu customizing unit;
Fig. 28 exemplifies the program for an entity generation process;
Fig. 29 is a flowchart showing the entity generation process;
Fig. 30 exemplifies the program for the process registering a menu item according to a use frequency;
Fig. 31 is a flowchart showing the process registering a menu item according to a use frequency;
Fig. 32 explains the process deleting a currently registered menu item;
Fig. 33 exemplifies the program for the process deciding a menu item to be deleted;
Fig. 34 is a flowchart showing the process deciding a menu item to be deleted;
Fig. 35 explains the process providing a menu suitable for a user;
Fig. 36 exemplifies a menu prepared for each category to which a user belongs;
Fig. 37 is a block diagram showing the configuration of the computer executing a program describing the processes according to the present invention; and
Fig. 38 explains the method providing software programs etc. according to the present invention.

### Best Mode of Carrying Out the Invention

Hereinafter, preferred embodiments according to the present invention will be described.

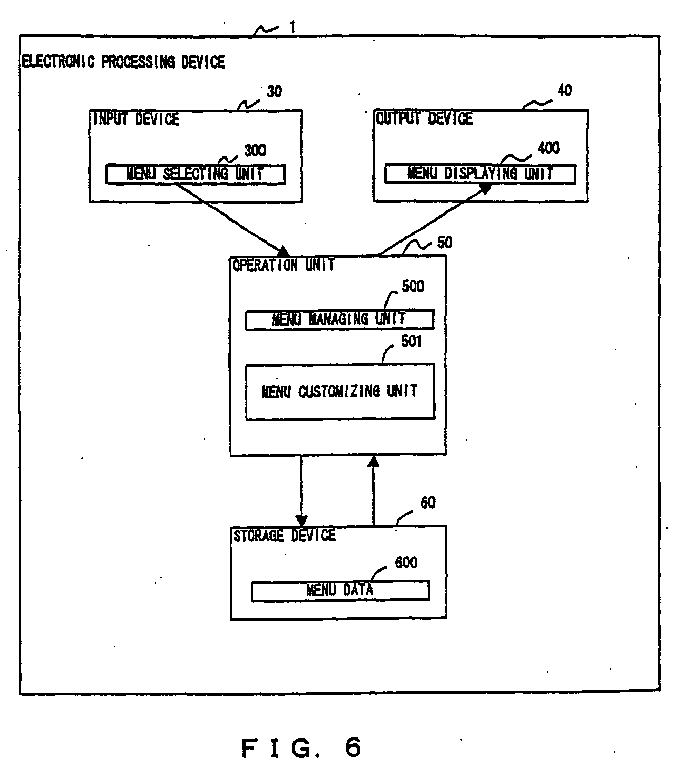

Fig. 6 is a block diagram showing the configuration of an electronic processing device to which the present invention is applied.

An electronic processing device 1 comprises an input device 30, an output device 40, an operation unit 50, and a storage device 60. The input device 30 is, for example, a mouse, a keyboard, a touch panel, etc. The output device 40 is, for example, a liquid crystal display, a CRT display, etc. The operation unit 50 is, for example, a CPU. The storage device 60 is, for example, a semiconductor memory, a magnetic disk, etc.

The input device 30 comprises a menu selecting unit 300 executing the process accepting an instruction (selection instruction) that is input using the menu displayed on the output device 40. The menu selecting unit 300 recognizes the menu item selected by a user or different devices (hereinafter, a user or other devices is referred to simply as a "user") by detecting a mouse click, a keyboard operation, or an input on the touch panel. The menu selecting unit 300 corresponds to the selecting means 14, 18, 21, or 28 shown in Fig. 2, 3, 4, or 5, respectively.

The output device 40 comprises a menu displaying unit 400 which performs a process displaying a menu. The menu displaying unit 400 corresponds to the displaying means 13, 17, 20, or 27 shown in Fig. 2, 3, 4, or 5, respectively.

The operation unit 50 comprises a menu managing unit 500 which performs a process managing menu data defining a menu, and a menu customizing unit 501 which performs a process customizing a menu. The menu managing unit 500 and the menu customizing unit 501 are implemented by executing a program that is described in advance. The storage device 60 stores menu data 600 representing the configuration of a menu.

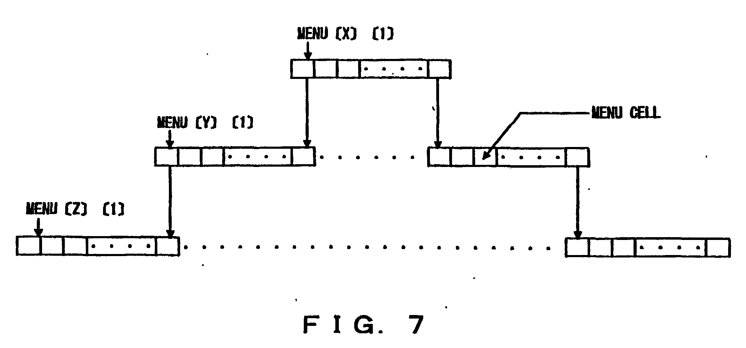

Menus that are used by the electronic processing device 1 are configured hierarchically as shown in Fig. 7. Each of the hierarchies is configured by one or more menu cells. The menu data 600 is configured by hierarchically associating a plurality of menu cells.

A menu cell is a structure for implementing one menu item, and is defined by the following Three information.
(1) item number: Number for identifying a menu item. Composed of a hierarchy number and a row number in the hierarchy. In the example shown in Fig. 7, each item number is represented by "menu[i][j]". Here, [i] represents an "i"th hierarchy, while [j] represents a "j"th menu item in the "i"th hierarchy.
(2) next hierarchy number: Number of a next hierarchy, when a corresponding menu item is selected.
(3) function number: Number for identifying a function to be executed when a corresponding menu item is selected.

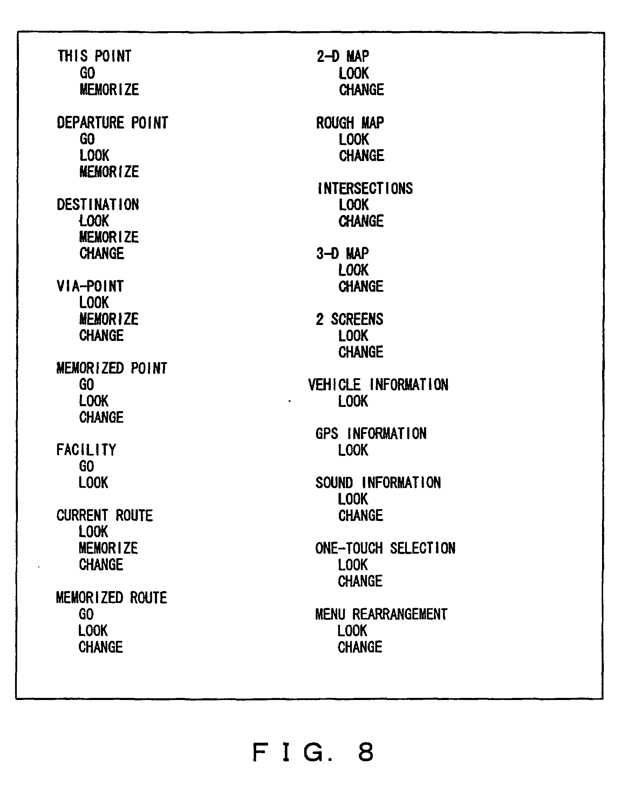

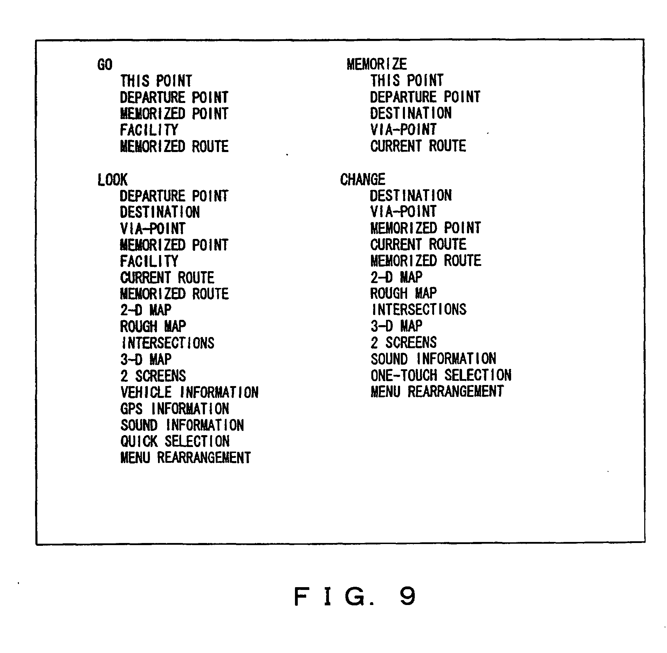

Figs. 8 and 9 exemplify the configuration of a menu used in a car navigation system. These menu configurations are stored in the storage device 60 shown in Fig. 6 as the menu data 600.

The menu shown in Fig. 8 has a data structure where objects (or nouns) belong to a higher-level hierarchical menu, while predicates (or verbs) corresponding to the objects belong to a lower-level hierarchical menu.

Namely, in the menu structure shown in Fig. 8, objects such as "this point", "departure point", "destination", "via-point", "memorized point", "facility", "current route", "memorized route", "2-D map", "roughmap", "intersections", "3-Dmap, "2 screens", "vehicle information", "GPS information", "sound information", "one-touch selection", "menu rearrangement", etc. belong to the higher-level hierarchical menu. In the meantime, predicates which correspond to the objects belonging to the higher-level hierarchical menu, such as "go", "memorize", etc. belong to the lower-level hierarchical menu". By way of example, the predicates "go", "look", and "memorize" are associated with the object "departure point" belonging to the higher-level hierarchical menu.

In the meantime, in the menu structure shown in Fig. 9, the predicates (or verbs) belong to the higher-level hierarchical menu, while the objects (or nouns) belong to the lower-level hierarchical menu.

That is to say, in the menu structure shown in Fig. 9, the predicates such as "go", "look", "memorize", "change", etc. belong to the higher-level hierarchical menu, while the objects such as "this point", "departure point", "memorized point", etc., which correspond to the predicates belonging to the higher-level hierarchical menu, belong to the lower-level hierarchical menu.

It should be remembered that the correspondences between objects and predicates are predetermined and registered to the storage device 60 in the menu structures shown in Fig. 8 and 9.

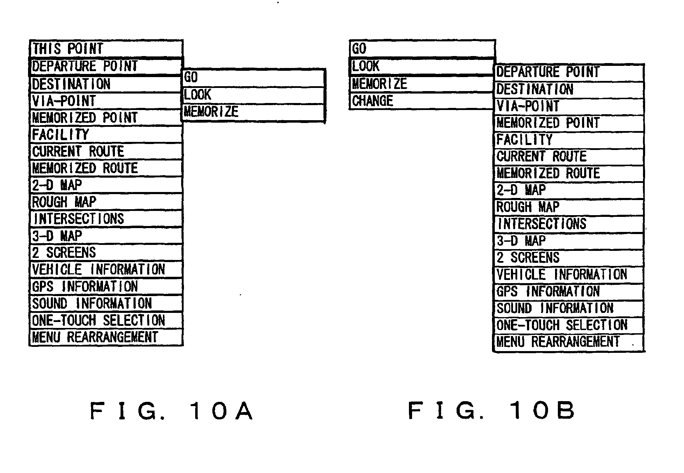

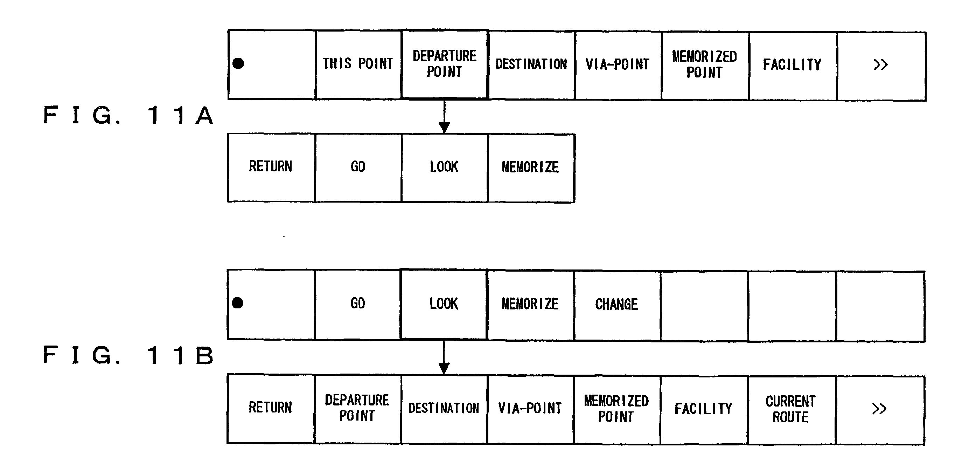

When utilizing the menu configuration shown in Fig. 8, the menu managing unit 500 displays, for example, an object menu shown in Fig. 10A or 11A on the output device 40. Fig. 10A shows an example where the menu is displayed in a pop-up menu form, while Fig. 11A shows an example where the menu is displayed in a button menu form. The processes for displaying these menus are executed by the menu displaying unit 400. Note that each object belonging to an object menu is a menu item that can be selected by a user.

If a certain object is selected from the object menu displayed on the output device 40, the menu (predicate menu) to which the predicates corresponding to the selected object belong is displayed. For example, in the example shown in Fig. 10A or 11A, "departure point" is selected from the object menu, and "go", "look", and "memorize", which belong to the lower-level hierarchical menu, are displayed as the predicates corresponding to the "departure point". These predicates are menu items that can be selected by a user. It should be noted that the correspondences between objects and predicates are stored in the storage device 60 as the menu data 600, as explained earlier by referring to Fig. 8.

In the meantime, when utilizing the menu configuration shown in Fig. 9, the menu managing unit 500 displays, for example, the predicate menu shown in Fig. 10B or 11B on the output device 40. Fig. 10B shows an example where the menu is displayed in a pop-up menu form, while Fig. 11B shows an example where the menu is displayed in a button menu form. In this case, predicates belonging to the predicate menu are menu items that can be selected by a user.

If a certain predicate is selected from the predicate menu displayed on the output device 40, the menu (object menu) to which the objects corresponding to the selected predicate belong is displayed in this case. For example, in the example shown in Fig. 10B or 11B, "look" is selected from the predicate menu, and "departure point", ··· "menu rearrangement", which belong to the lower-level hierarchical menu, are displayed as the objects corresponding to "look". Also these objects are menu items that can be selected by a user.

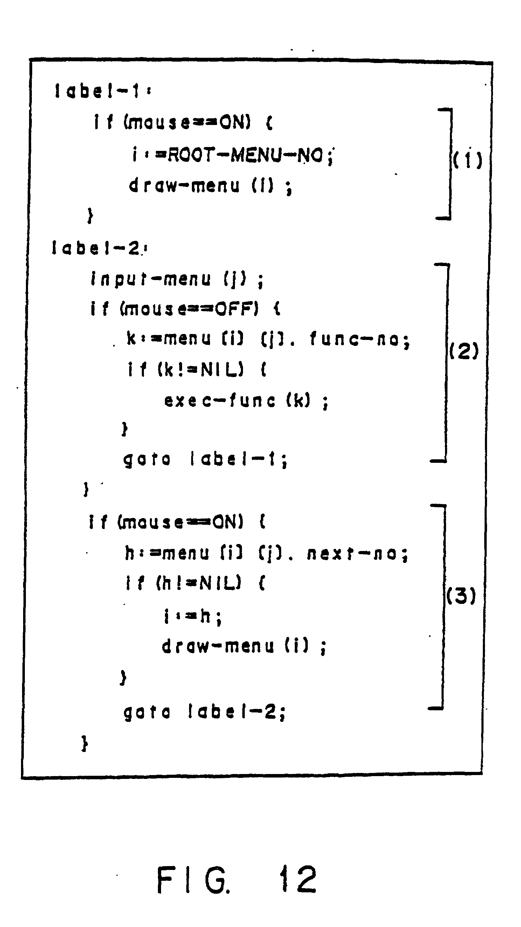

Fig. 12 exemplifies a program describing the processes for displaying a menu in the form shown in Fig. 10A or 10B. A process setting a root menu as a hierarchical menu to be displayed and drawing the hierarchical menu when a mouse is ON are described in a first section. A process inputting a menu item, a process setting the number of a corresponding function when a mouse is OFF, and a process executing the function if the number of the function exists are described in a second section. When a mouse is clicked (when the mouse is switched off after being switched on) in the state where a mouse pointer overlaps a certain menu item, the menu item is recognized to be selected. A process setting the number of the next hierarchical menu when the mouse is ON, a process setting the hierarchical menu corresponding to the number of the next hierarchical menu as a hierarchical menu to be displayed if the number exists, and a process drawing the hierarchical menu are described in a third section.

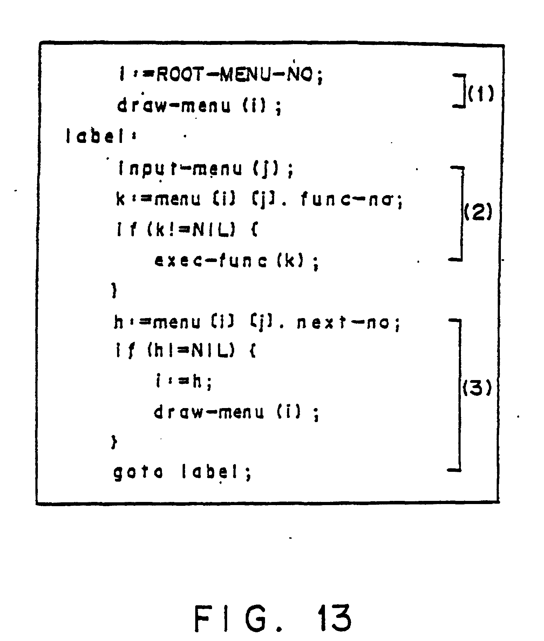

Fig. 13 exemplifies the program describing the processes for displaying a menu in the form shown in Fig. 11A or 11B. A process setting a root menu as a hierarchical menu to be displayed, and a process drawing the hierarchical menu are described in a first section. A process inputting a menu item, a process setting the number of a function, and a process executing the function if the number of the function exists are described in a second section. A process setting the number of the next hierarchical menu, a process setting the hierarchical menu corresponding to the number of the next hierarchical menu as a hierarchical menu to be displayed if the number exists, and a process drawing the hierarchical menu are described in a third section.

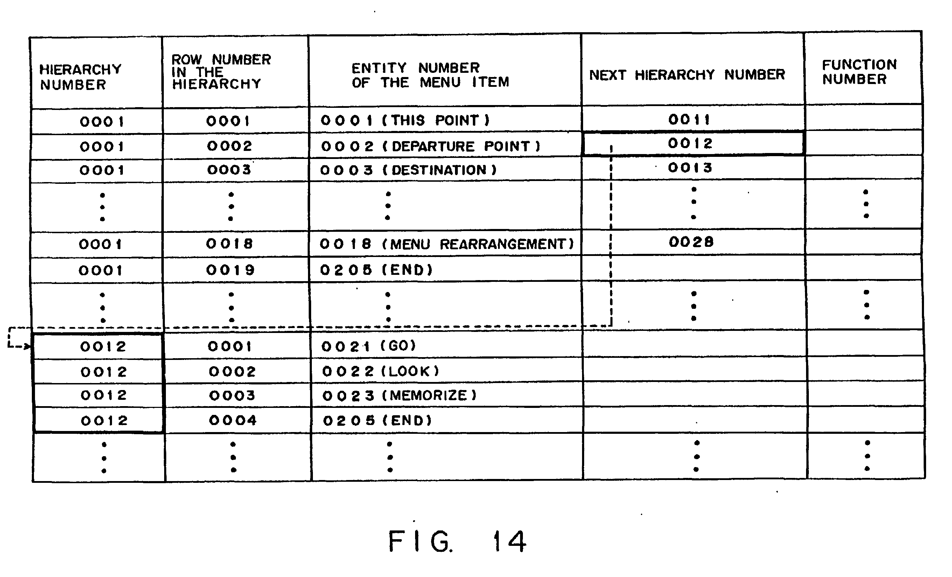

Fig. 14 exemplifies the menu data for implementing the menu display shown in Fig. 10A. A hierarchy number identifies a hierarchical menu including one or more menu items. A row number in the hierarchy identifies a menu item in each hierarchy. An entity number is an identification number for each menu content, etc., which is uniquely assigned within menu data. A next hierarchy number instructs the output device 11 of a hierarchical menu to be displayed, when a corresponding menu item is selected. A function number identifies a function that is called and executed, when a corresponding menu item is selected.

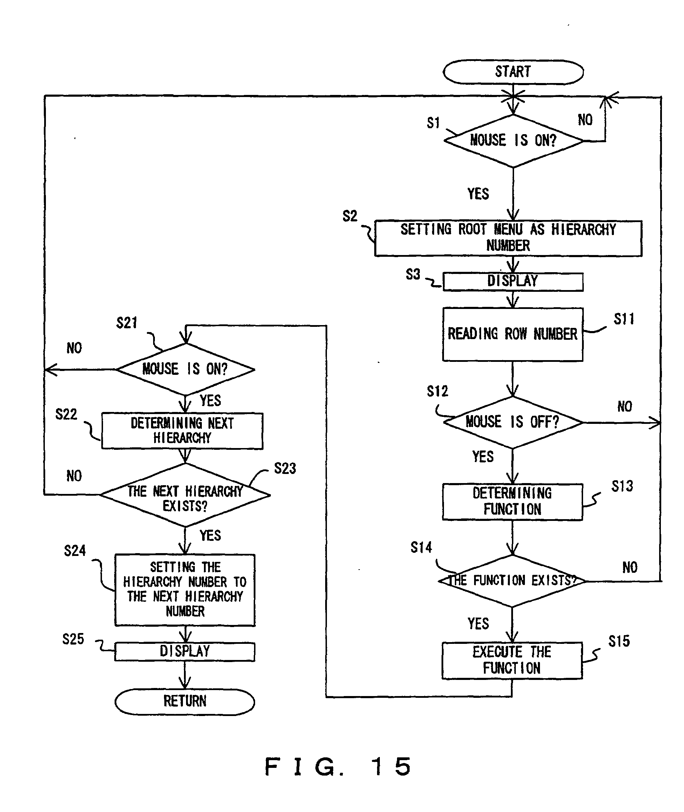

Fig. 15 is a flowchart showing the processes for displaying the menu shown in Fig. 10A. In step S1, whether or not a mouse is switched on (that is, whether or not amouse button is pressed) is monitored. Although a mouse is adopted as the input device 10 here, a keyboard, a touch panel, etc. may be used alternatively.

In step S2, the hierarchical menu number of a root menu is set as the menu hierarchical number of a menu to be displayed. In step S3, the menu corresponding to the hierarchy number set in step S2 is displayed. In the embodiment, "hierarchy number=0001" is set, and the menu including "this point", ... "rearrangement", which is shown in Fig. 10A, is displayed.

In step S11, the row number in the hierarchy, which corresponds to the menu item instructed by the operation in step S1, is read from the hierarchical menu displayed in step S3. In step S12, whether or not the mouse is switched off (whether or not the mouse button is released) is monitored. In step S13, the function to be called is determined based on the hierarchy number of the displayed hierarchical menu and the row number read in step S11. In step S14, whether or not the determined function exists is examined. Then, in step S15, this function is executed.

In step S21, whether or not the mouse is switched on. In step S22, the row number in the hierarchy, which corresponds to the menu item instructed by the operation in step S21, is read, and the hierarchical menu at a next hierarchy is determined based on the hierarchy number of the displayed hierarchical menu and the row number. In step S23, whether or not the hierarchical menu at the next hierarchy exists is examined. In step S24, the hierarchy number determined in step S22 is set as the hierarchy number of the hierarchical menu to be displayed. Then, in step S25, this hierarchical menu is displayed.

In the embodiment, "row number=0002" is read when a "departure point" is selected. Then, "the hierarchy number of a next hierarchy=0012" is obtained according to the "hierarchy number=0001" and "row number=0002". As a result, the predicate menu including "go", "look", and "memorize" is displayed.

Then, the process goes back to step S1. Therefore, if a menu item is selected from the displayed predicate menu in step S25, the function corresponding to the selected menu item is called and executed.

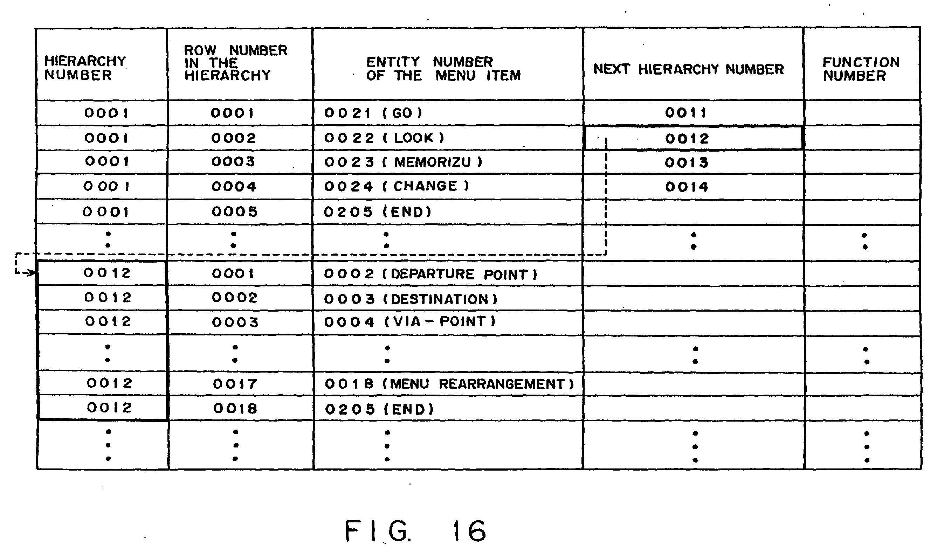

Fig. 16 exemplifies the menu data for implementing the menu display shown in Fig. 10B. The configuration of this menu data is fundamentally the same as that shown in Fig. 14. Additionally, the process for displaying the menu shown in Fig. 10B is implemented by the flowchart shown in Fig. 15.

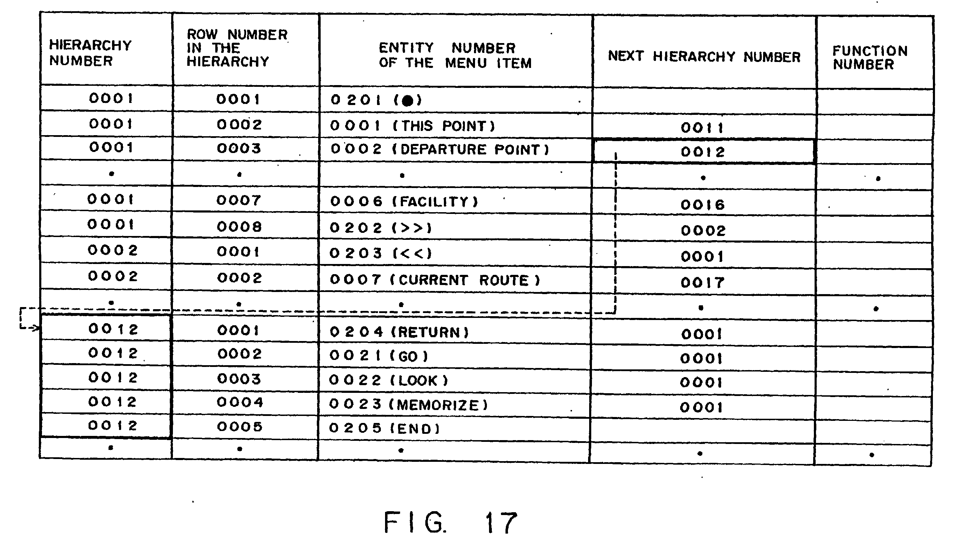

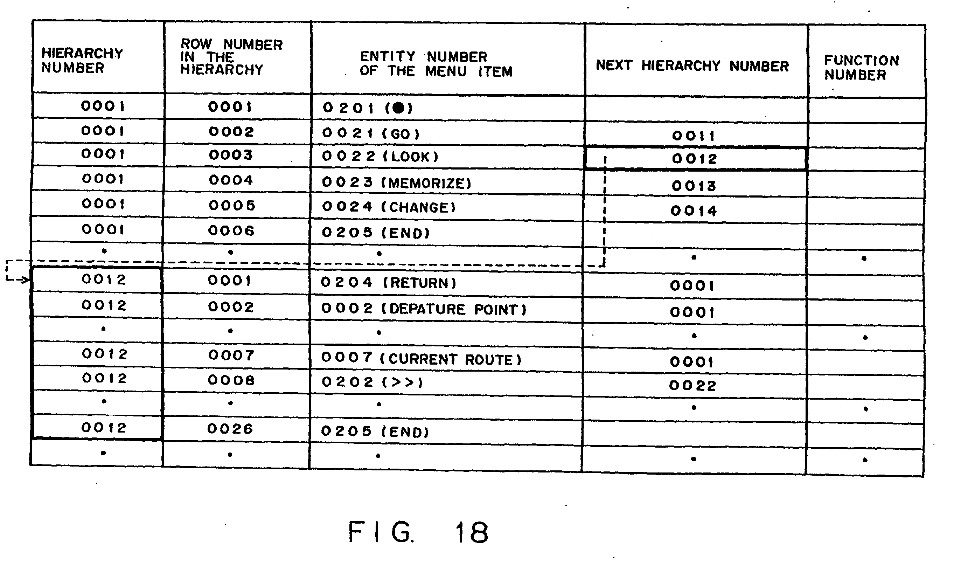

Figs. 17 and 18 respectively exemplify the menu data for implementing the menu displays shown in Figs. 11A and 11B. Also the configurations of these menu data are fundamentally the same as that shown in Fig. 14. If the number of menu items belonging to a certain hierarchical menu is large, and if the menu items cannot be displayed on one screen, the hierarchical menu is virtually divided into a plurality of hierarchical menus within the menu data, and is managed in some cases. For example, "this point", "departure point", "facility", and "current route" are menu items that belong to an object menu. However, "this point", "departure point", and "facility" belong to the hierarchy corresponding to the "hierarchy number=0001", while "current route" belongs to the hierarchy corresponding to the "hierarchy number=0002".

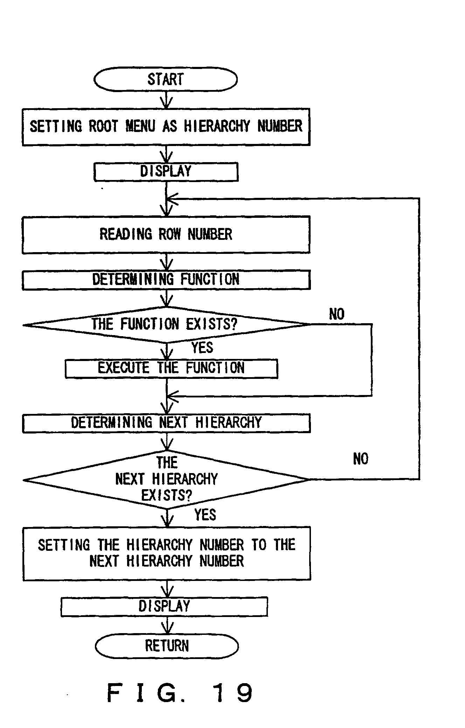

Fig. 19 is a flowchart showing the process for displaying the menu shown in Fig. 11A or 11B. Since the operations of this flowchart have many commonalities with those of the flowchart shown in Fig. 15, their explanations are omitted here.

As described above, with the electronic processing device 1 according to this embodiment, a menu is displayed according to the procedure of "an object to a predicate" (a procedure for determining an object in which a user is interested, then determining how to do with the object), or according to the procedure of "a predicate to an object" (a procedure for determining how to do, then determining an object in which a user is interested) . Accordingly, it is easy to grasp the entire structure of a menu, whereby user operations are made uniform. Additionally, menu hierarchies are made even, whereby an easy-to-use menu is implemented.

The above described embodiment refers to the method displaying a menu of "an object to a predicate" type, or a menu of "a predicate to an object" type. An electronic processing device according to another embodiment to be described next provides these two menus, and makes a user select a menu to be used. In this way, an easy-to-use menu for a user is provided.

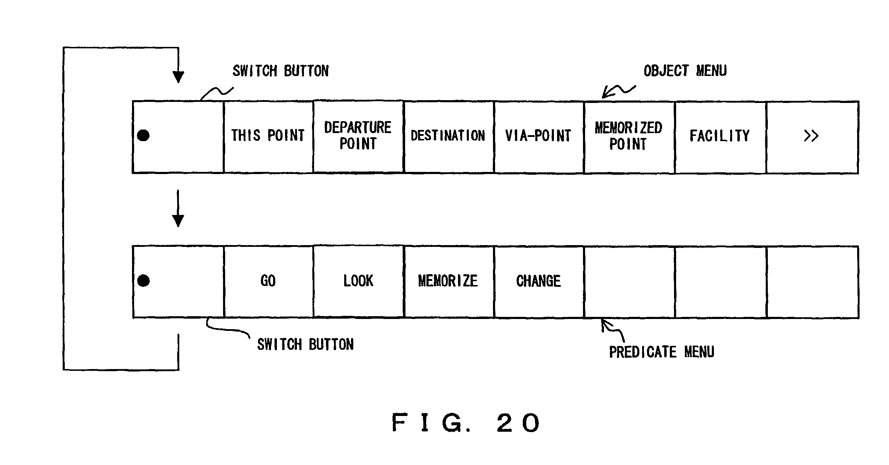

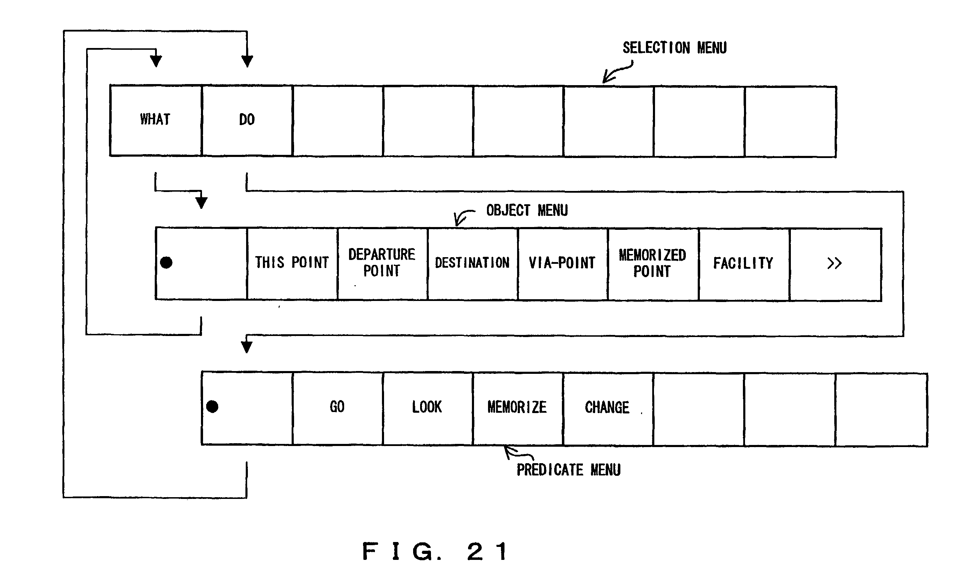

Figs. 20 and 21 exemplify the menu comprising a display mode switching capability. Here, a menu is displayed in a button menu form.

In the example shown in Fig. 20, a switch button for displaying a predicate menu is arranged in an object menu, while a switch button for displaying an object menu is arranged in the predicate menu. At the initial stage of a menu display, either the object menu or the predicate menu is displayed. For instance, if the switch button is selected in the state where the object menu is displayed as a higher-level hierarchical menu, the predicate menu is opened and the object menu is closed on the screen. In his case, the predicate menu becomes a higher-level hierarchical menu. Or, if the switch button is selected in the state where the predicate menu is displayed as a higher-level hierarchical menu, the object menu is opened and the predicate menu is closed on the screens. In this case, the object menu becomes a higher-level hierarchical menu. The operations performed when a desired menu item is selected in the state where the object or the predicate menu is displayed are the same as those explained by referring to Figs. 10 through 19.

In the example shown in Fig. 21, the menu (selection menu) for making a user select the object menu or the predicate menu is arranged in addition the configuration shown in Fig. 20. In this selection menu, "what" is a button for selecting the object menu, while "do" is a button for selecting the predicate menu.

In this configuration, the selection menu is displayed at the initial stage of the menu display. Then, the object menu or the predicate menu is opened according to a selected button. The subsequent operations are the same as those for the menu shown in Fig. 20.

With the introduction of the above described configuration, a user can arbitrarily select either the display mode in which the menu of "an object to a predicate" type is displayed, or the display mode in which the menu of "a predicate to an object" type is displayed, leading to a convenience to the user.

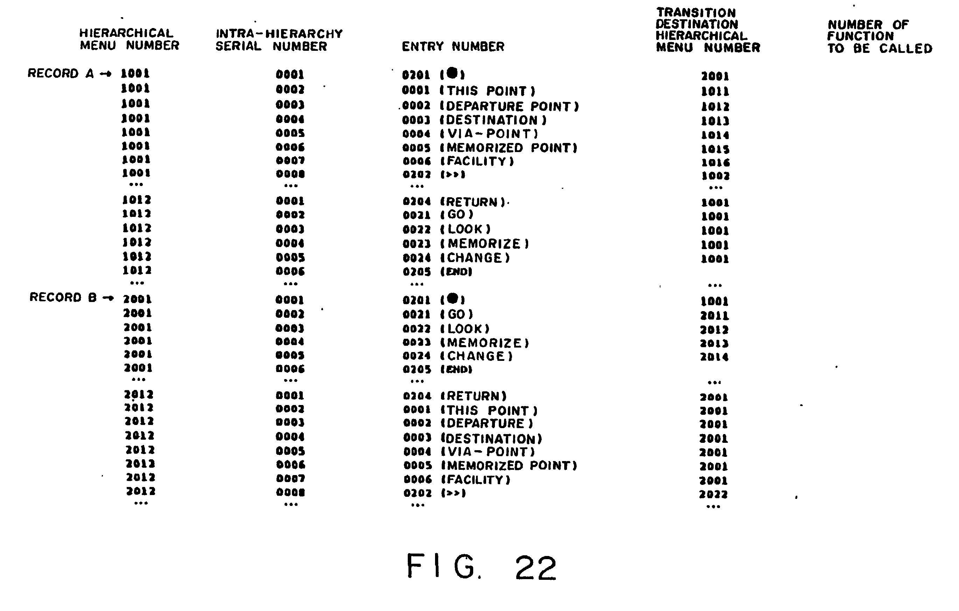

Fig. 22 exemplifies the menu data for implementing the menu display shown in Fig. 20. In this menu data, the information about the switch button arranged within the object menu is stored in a record A, to which the number (2001) representing the predicate menu is registered as a next hierarchy number. Additionally, the information about the switch button arranged in the predicate menu is stored in a record B, to which the number (1001) representing the object menu is registered as a next hierarchy number. The operation for switching a menu to be displayed is realized by this link information.

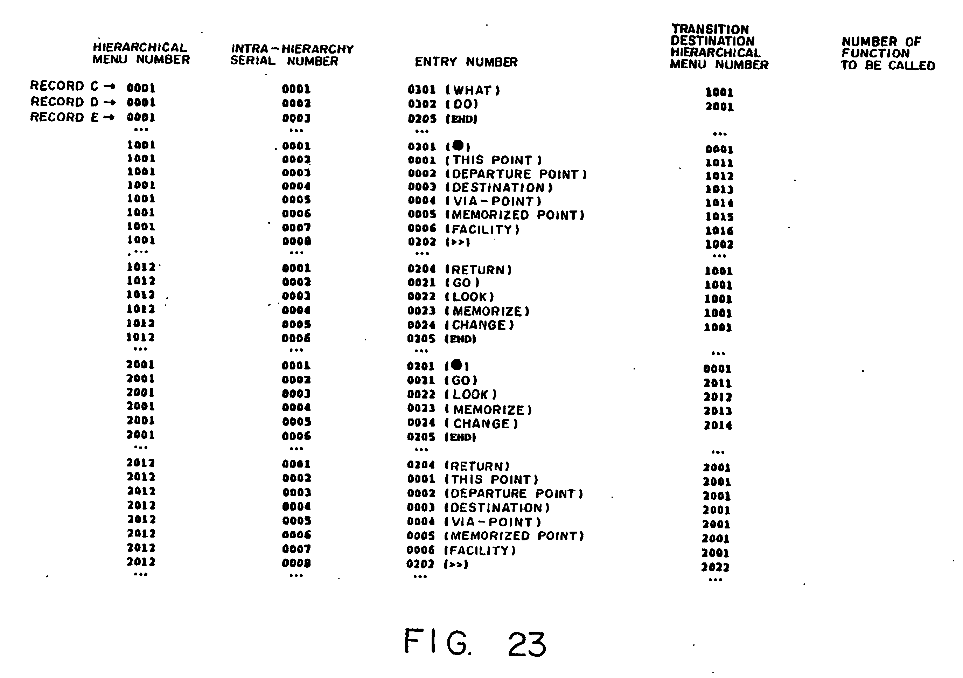

Fig. 23 exemplifies the menu data for implementing the menu display shown in Fig. 21. In this menu data, the information about the selection menu are registered to records C to D. The information about the button for making a user select the object menu is stored in the record C, to which the number (=1001) representing the object menu is registered as a next hierarchy number. Additionally, the information about the button formaking a user select the predicate menu is stored in the record D, to which the number (=2001) representing the predicate menu is registered as a next hierarchy number.

The above described embodiment refers to the configuration where the object and predicate menus are arranged. However, the present invention is not limited to these menus. By way of example, a complement menu, a noun menu, a verb menu, an adjective menu, an adverb menu, etc. may be arranged.

Next, the processes executed by the menu customizing unit 501 will be explained.

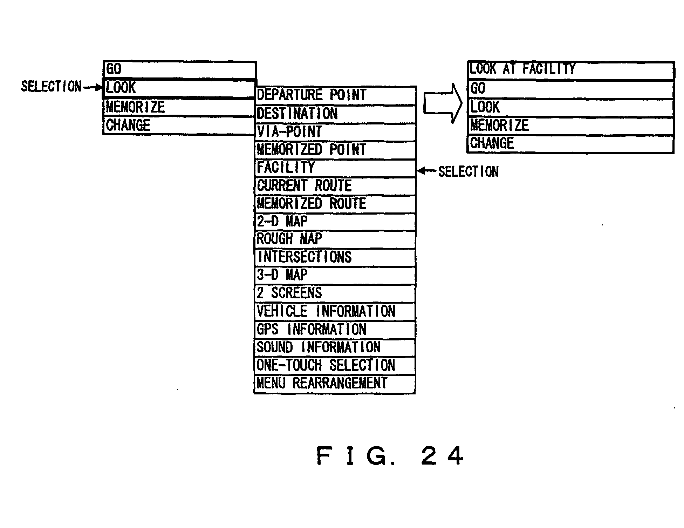

The menu customizing unit 501 has a capability for generating a new menu item defined by a combination of menu items respectively selected in different hierarchical menus, and for registering the new menu item. In the example shown in Fig. 24, "look at facility", which is defined by a combination of "look" selected from the predicate menu being a higher-level hierarchical menu, and a "facility" selected from the object menu being a lower-level hierarchical menu, is generated and registered to the menu data.

Hereafter, this newly generated menu item belongs to, for example, the predicate menu or the object menu. In this example, "look at facility" is displayed as the menu item belonging to the predicate menu. If "look at facility" is selected in the predicate menu in this case, the same process as that performed in the case where a "facility" is selected from the object menu after "look" is selected from the predicate menu will be performed.

As described above, according to this embodiment, the menu customizing unit 501 is arranged in the electronic processing device, so that even the process, which conventionally requires the operation for selecting menu items in respective hierarchical menus one by one while sequentially opening the menus, can be performed by just one selection operation.

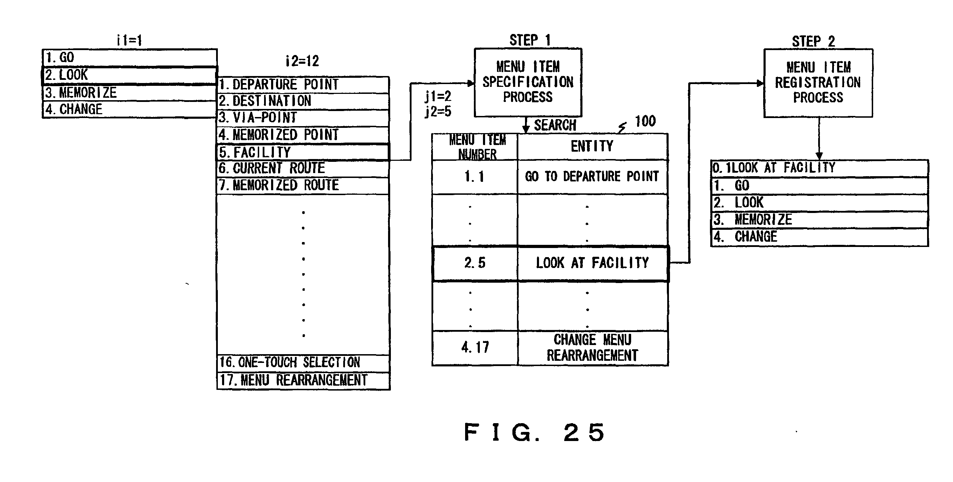

Fig. 25 explains a registration process executed by the menu customizing unit 501.

An entity table 100 manages the correspondence between a combination of menu items, and the content to be displayed as a new menu item generated by the combination. The menu customizing unit 501 registers a new menu item other than menu items defined by default with the use of the entity table 100.

That is, the menu customizing unit 501 recognizes a plurality of menu items selected by a user in an interaction process in Step 1. In this example, a recognition such that a menu item "look(j1=2)" is selected from a higher-level hierarchical menu (i1=1), and a menu item "facility(j2=5)" is selected from a lower-level hierarchical menu (i2=12) is made in an interaction with a user.

Furthermore, in Step 1, the entity (the content of a display) of a menu item to be newly generated is determined by searching the entity table 100 with the use of the numbers (j1 and j2) of the recognized menu items as a search key. In this example, "lookat facility" is obtained as the entity of a new menu item by searching the entity table 100 with the use of the numbers of the menu items "j1=2" and "j2=5" as a search key.

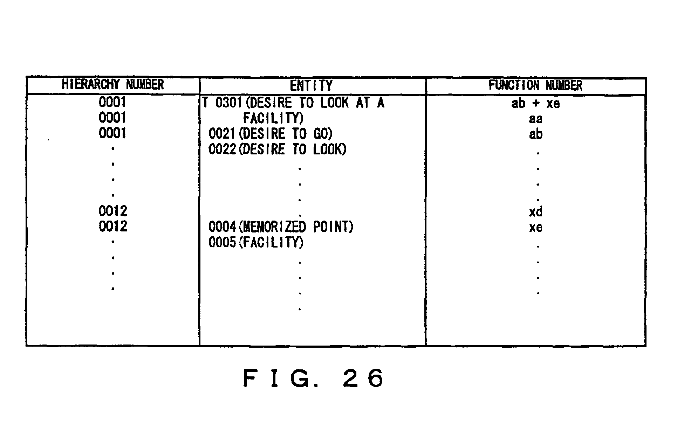

Next, in Step 2, the menu item having the entity obtained in Step 1 is registered to the menu data stored in the storage device 60. The process is then terminated. Here, the function assigned to the newly registered menu item is substantially the same as the combination of the function that is called when "look" is selected, and the function that is called when the "facility" is selected after that. Specifically, for example, the record for "look at facility" is generated in the menu data, and a value "ab" directing a function corresponding to "look" and a value "xe" directing a function corresponding to "facility" are registered as a called function of the generated record. Or, a software program to be executed when "look" and the "facility" are successively selected may be prepared beforehand, and the number for identifying the program may be registered in correspondence with "look at facility". Notice that "a row number in the hierarchy" and "a next hierarchy number" are omitted in Fig. 26.

As described above, the menu customizing unit 501 generates a new menu item defined by a combination of a menu item selected from a higher-level hierarchical menu, and a menu item selected from a lower-level hierarchical menu, and registers the new menu item to menu data. As a result, a user can select his or her required menu item with just one operation (one click) .

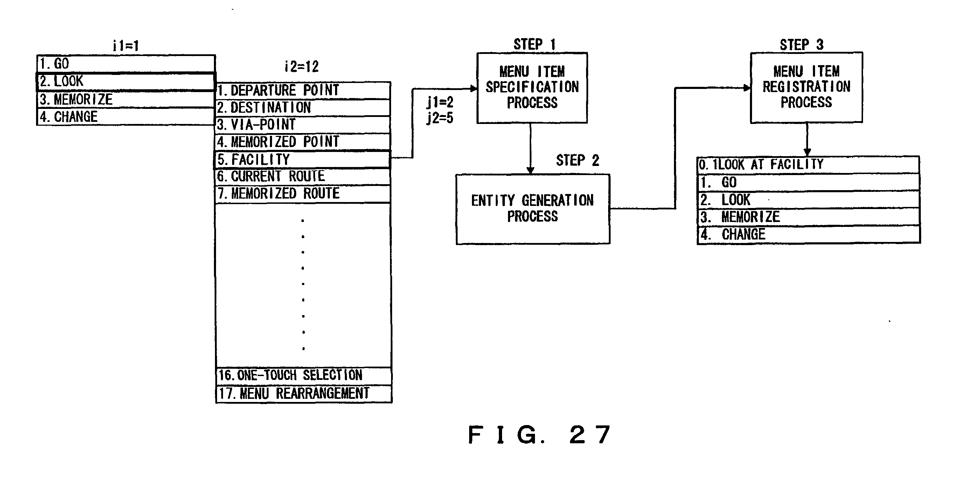

The example shown in Fig. 25 shows the configuration where the entity of a menu item to be newly registered is selected from the prepared entry table 100. However, the electronic processing device according to this embodiment may also generate the entity of a new menu item with a software program each time a new menu item is to be generated, as shown in Fig. 27.

With the method shown in Fig. 27, when a plurality of menu items to be customized, which are selected by a user in an interaction process, are recognized in Step 1, the entity for a new menu item is generated according to the plurality of menu items in Step 2. Then, in Step 3, the menu item having the generated entity is registered to the menu data stored in the storage device 60.

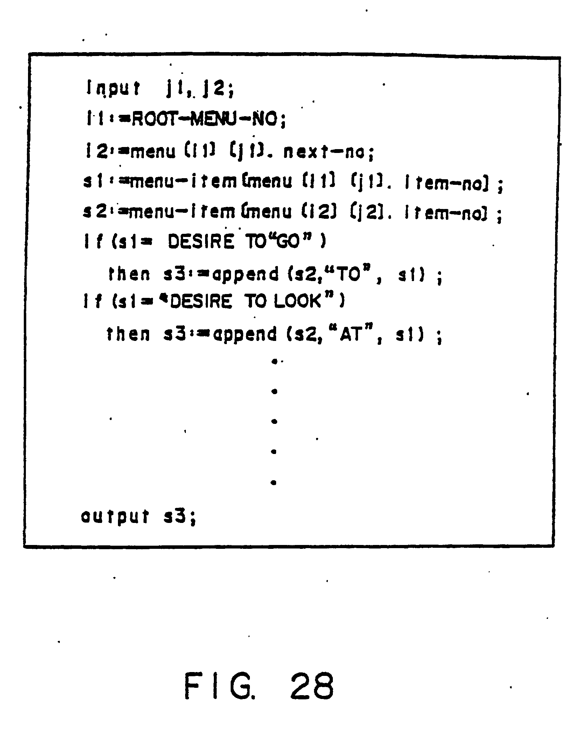

Fig. 28 exemplifies a software program for implementing the generation process performed in Step 2 of Fig. 27. The example shown in Fig. 28 describes the process generating an entity "go to xxx" by interposing a connecting word "to" between the menu item (xxx) selected from a lower-level hierarchical menu (the object menu in this case) and that selected from a higher-level hierarchical menu (the predicate menu in this case) based on the assumption that the menu item selected from the higher-level hierarchical menu is "go", or describes the process generating an entity "look at xxx" by interposing a connecting word "at" between the menu item (xxx) selected from the lower-level hierarchical menu and that selected from the higher-level hierarchical menu based on the assumption that the menu item selected from the higher-level hierarchical menu is "look". By executing this program, an entity is generated from the menu item belonging to a selected higher-level hierarchical menu, and that belonging to a lower-level hierarchical menu.

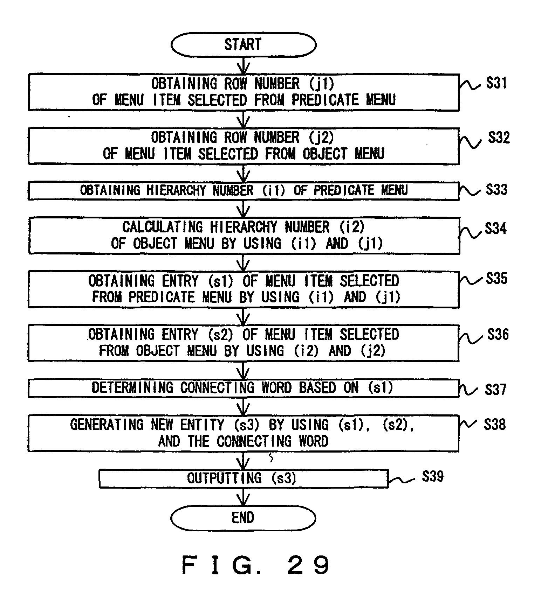

Fig. 29 is a flowchart showing the generation process performed in Step 2 of Fig. 27. Here, explanation is provided by assuming that the predicate menu is a higher-level hierarchical menu, and the object menu is a lower-level hierarchical menu. The process of this flowchart is also applicable with a simple modification to the case where the object menu is a higher-level hierarchical menu.

In step S31, the row number (j1) of a menu item selected from the predicate menu is obtained. In step S32, the row number (j2) of a menu item selected from the object menu is obtained. In step S33, the hierarchy number (i1) of the predicate menu is obtained. In step S34, the hierarchy number (i2) of the object menu is calculated by using the hierarchy number (i1) and the row number (j1). In step S35, the entity (s1) of the menu item selected from the predicate menu is obtained by using the hierarchy number (i1) and the row number (j1). In step S36, the entity (s2) of the menu item selected from the object menu is obtained by using the hierarchy number (i2) and the row number (j2).

In step S37, a connecting word to be used is determined based on the entity (s1) of the menu item selected from the predicate menu. For example, if the entity is "look", "at" is output as a connecting word. Or, if the entity is "go", "to" is output as a connecting word. In step S38, a new entity (s3) is generated by using the entities (s1 and s2), and the connecting word determined in step S37. Then, in step S39, the new entity (s3) generated in step S38 is output.

In the example shown in Fig. 25, the entity of new menu item is prepared manually in advance by a user. In this embodiment, however, the entity of new menu item is generated automatically.

By way of example, a menu item suitable for a user may automatically be registered by estimating a user operation pattern based on the use frequency of each menu item. In this case, the number of times that each menu item is selected by a user is counted up, and a menu item is registered as a one-touch-selection menu item if the number of times (for example, the number of times that the menu item is used in recent days) exceeds a predetermined value. For instance, if a user repeatedly performs the sequence composed of the operation for selecting a "facility" and the operation for selecting "look", the menu item "look at facility" is automatically generated and registered.

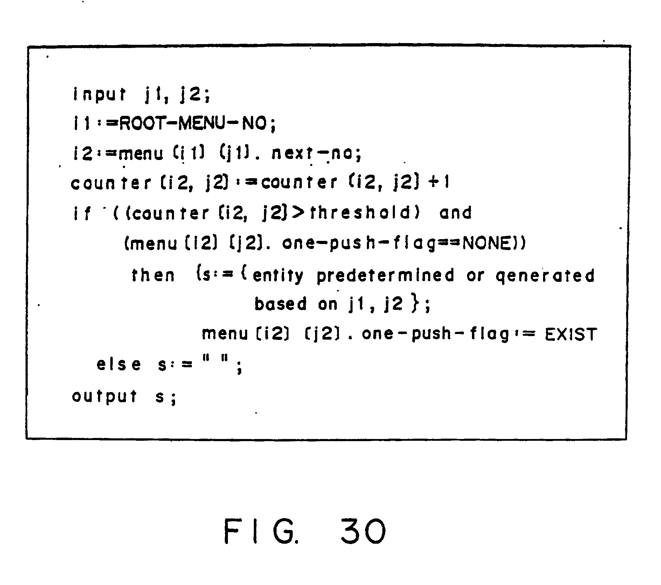

Fig. 30 exemplifies the program describing the process registering a new menu item based on a use frequency. This program describes the process incrementing by "1" the value of the counter, which is arranged in correspondence with a menu item (j2) belonging to the lower-level hierarchical menu (i2), each time the menu item (j2) is selected, and the process registering as a one-touch-selection menu item a menu item defined by a combination of the menu item (i1) of the higher-level hierarchical menu and the above described menu item (j2), if the menu item defined by the combination is not currently registered.

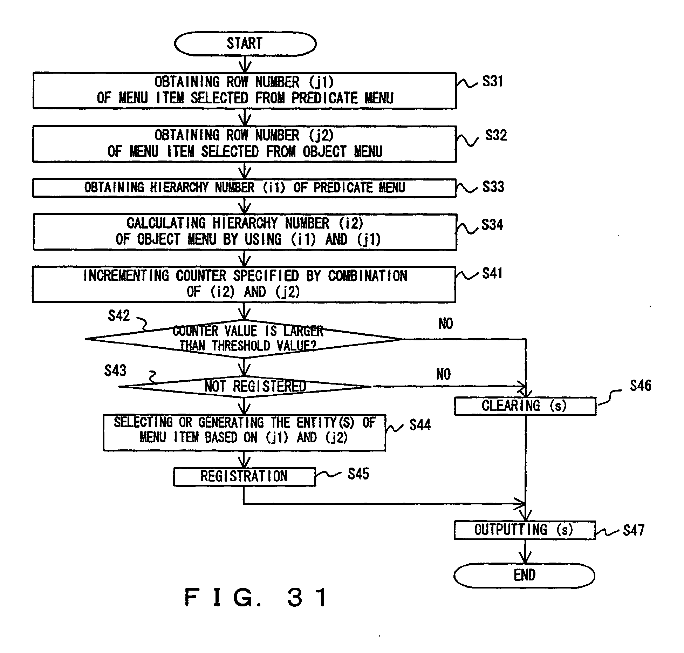

Fig. 31 is a flowchart showing the process registering a new menu item based on a use frequency. Here, steps S31 through S34 are the same as those explained by referring to Fig. 29.

In step S41, the counter specified by the combination of the hierarchy number (i2) and the row number (j2) is incremented by 1. In step S42, whether or not the value of this counter is larger than a predetermined threshold value is examined. In step S43, whether or not the menu item defined by the combination of the hierarchy number (i2) and the row number (j2) is already registered is examined. If the value of the counter exceeds the threshold value, and if the menu item defined by the above described combination is not registered, an entity (s) is selected as in Fig. 25 or generated as in Fig. 27 depending on the higher-level hierarchy menu and lower-level hierarchy menu in step S44.

In step S45, the menu item, of which entity (s) is determined in step S43, is registered to menu data. At this time, the flag of the newly registered menu item is set. This flag is a value to be referenced for determining whether or not a corresponding menu item is already registered in step S43. If the result of the examination made in step S42 or S43 is "No", the entity (s) is cleared in step S46. Then, in step S47, the entity of the menu item (s) is output.

Additionally, either a method with which a one-touch-selection menu item is automatically registered, or a method with which a menu item is manually registered by a user may be selected, or these methods may be combined. Namely, the switching between automatic registration and manual registration may be made, and a menu item may be selected from a higher-level hierarchical menu, or menu items may be divided within one hierarchical menu.

Furthermore, in the above described embodiment, the menu customizing unit 501 generates and registers a new menu item by combining the menu items that are respectively selected from the two hierarchies (predicate and object menus). The present invention, however, is not limited to this method. A menu item may be generated and registered by combining menu items that are respectively selected from three or more menus. By way of example, an adjective menu and an adverb menu are arranged in addition to predicate and object menus, and menu items selected from the menus may be combined. With this method, for example, "quickly go to destination", "inexpensively go to destination ", and the like can be registered. Or, menu items that are selected from a predicate menu and a plurality of object menus may be combined.

Still further, in the above described embodiment, a new menu item defined by a combination of menu items selected from the first and the secondmenus is registered to the first or the second menu. However, the new menu item may be registered to a menu other than the first and the second menus. For instance, a menu displaying only a one-touch-selection menu item may be generated.

The example shown in Fig. 25 or 27 does not refer to the location to which a one-touch-selection menu item is registered. However, if there is an empty registration location, a menu item is sequentially located from the beginning or the end of the menu to be registered. Or, a registration location is determined with a random number, etc. If there is no empty registration location, for example, a menu item having the lowest use frequency in recent days or a menu item with the oldest registration date is replaced by a menu item to be registered.

The menu customizing unit 501 has a capability for deleting a currently registered one-touch-selection menu item in order to execute the above described registration process.

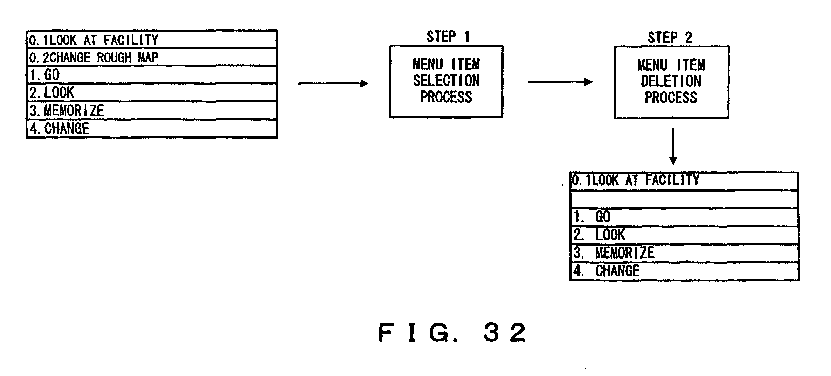

Fig. 32 shows one embodiment of the process deleting a one-touch-selection menu item, which is executed by the menu customizing unit 501. If a one-touch-selection menu item ("look at facility" and "change rough map" in this example), which is currently registered, must be deleted, the menu customizing unit 501 first chooses a one-touch-selection menu item to be deleted from among previously registered one-touch-selection menu items in Step 1, and deletes the chosen one-touch-selection menu item from the menu data in Step 2. The menu item to be deleted is determined by an interaction with a user or according to a predetermined rule. For example, a rule to delete amenu item having the lowest use frequency in recent days may be considered as a predetermined rule.

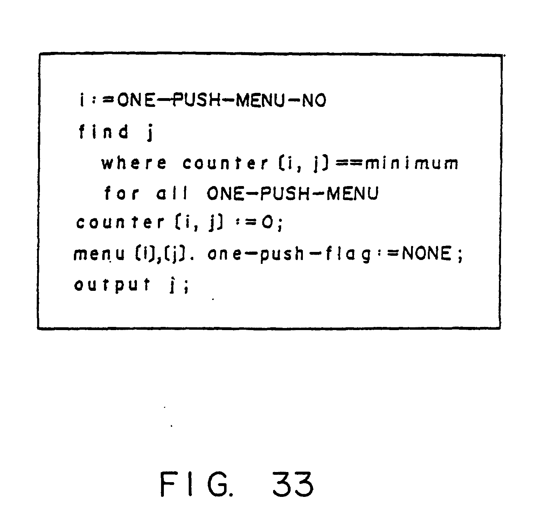

Fig. 33 exemplifies the program which describes the process determining a menu item to be deleted. This program describes the process detecting a menu item the counter value of which is the smallest from among the counters arranged for the menu items (j) belonging to a lower-level hierarchical menu (i), the process resetting the value of the counter, and the process deleting the corresponding menu item from the menu data 600.

In the program shown in Fig. 33, the one-touch-selection menu item having the lowest use frequency is deleted. However, all of one-touch-selection menu items having a use frequency that is equal to or lower than a threshold value may be deleted collectively, or the menu item the registration time of which is the oldest or the menu item that is registered earlier than a predetermined time may be deleted.

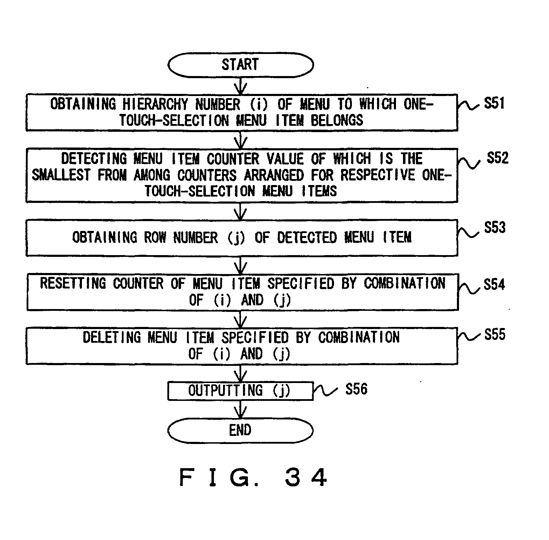

Fig. 34 is a flowchart showing the process determining a menu item to be deleted. In step S51, the hierarchical menu number (i) of the menu to which a one-touch-selection menu item is obtained. In step S52, the menu item the counter value of which is the smallest is detected from among the counters arranged for respective one-touch-selectionmenu items. In step S53, the intra-hierarchy serial number of the menu item detected in step S52 is obtained. In step S54, the counter for the menu item specified by the combination of the hierarchical menu number (i) and the intra-hierarchy serial number (j) is reset. In step S55, the menu item that is specified by the combination of the hierarchical menu number (i) and the intra-hierarchy serial number (j) is deleted from the menu data 600. Then, in step S56, the intra-hierarchy serial number (j) is output.

The electronic processing device 1 according to this embodiment has a capability for generating and displaying a menu suitable for a user.

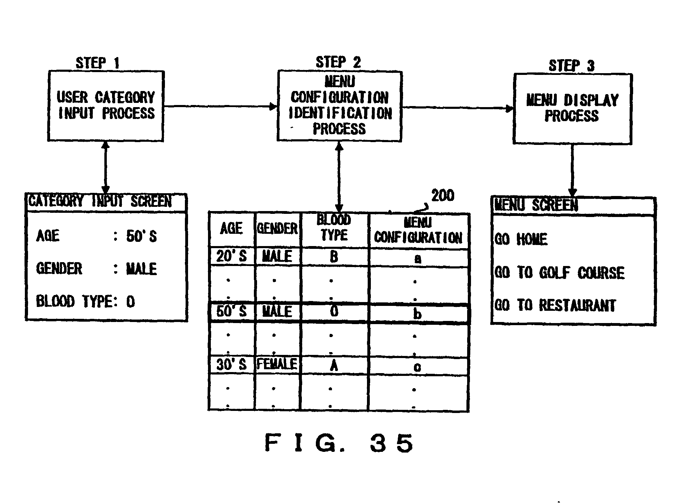

Fig. 35 explains the process generating and displaying a menu suitable for a user. This process is executed by the menu managing unit 500 shown in Fig. 6.

To generate and display a menu suitable for a user, a category correspondence table 200 for managing a menu to be provided for each category to which a user belongs is stored in the storage device 60. Here, a category for grouping a user is determined, for example, according to an age, gender, blood type, etc. The menu managing unit 500 generates a menu suitable for a user with the category correspondence table 200, and displays the generated menu.

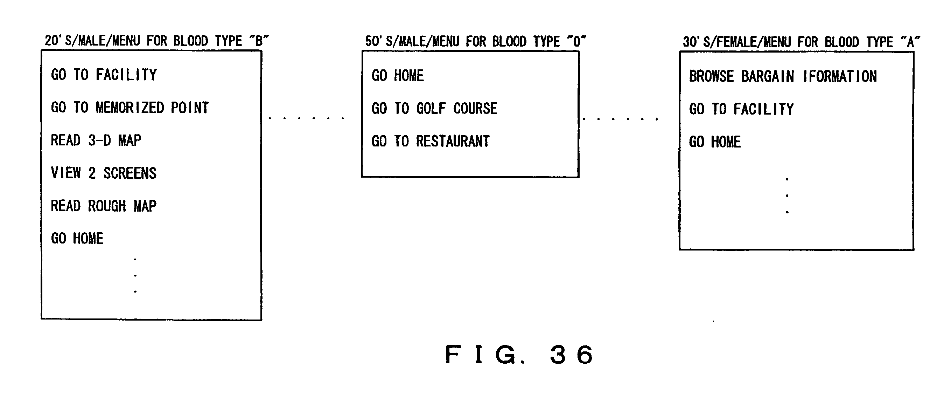

Fig. 36 exemplifies the configuration of the menu prepared for each category to which a user belongs. Here, a plurality of menus which are prepared for the start-up of a car navigation system are displayed. Note that "go to facility", "go to memorized point", "read-3-D map", etc. are menu items, respectively.

Here, the operations of the menu managing unit 500 are explained. The menu managing unit 500 first obtains the category to which a user belongs in Step 1. For example, the menu managing unit 500 obtains necessary information from a user with an interaction by displaying the screen for making the user input his or her age, gender, etc. By way of example, for a car navigation system, these information items may be input by a car dealer or with a different method.

Then, in Step 2, the menu managing unit 500 searches the category correspondence table 200 by using the category to which the user belongs as a search key, and identifies the menu data corresponding to that category. In Step 3, the menu managing unit 500 displays a menu according to the identified menu data. In this way, a menu suitable for a user is displayed.

As described above, with the electronic processing device 1, a menu suitable for a category to which a user belongs is displayed in consideration of the fact that a user liking relates to the category to which the user belongs, whereby an easy-to-use menu for the user is provided.

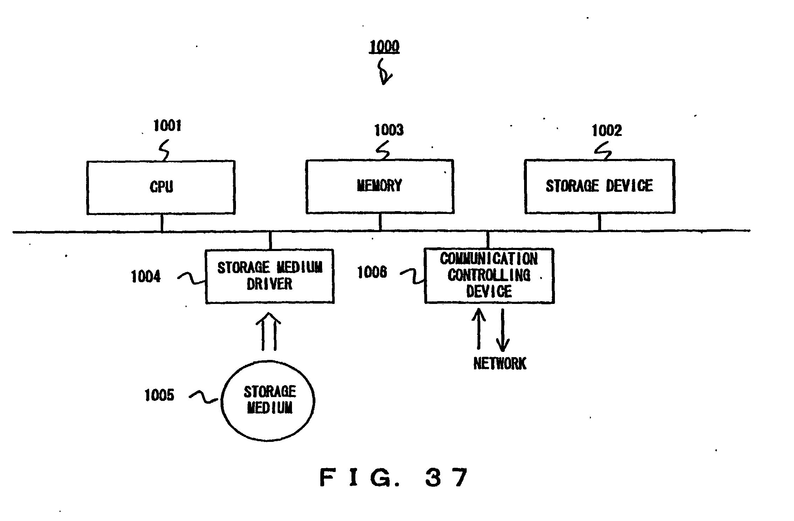

The capabilities of the present invention are implemented by executing the programs describing the above described processes with a computer. The block diagram of the computer executing this program is shown in Fig. 37.

A CPU 1001 loads the program describing the above described processes from a storage device 1002 to a memory 1003, and executes the program. The storage device 1002 is, for example, a semiconductor memory or a hard disk, and stores the above described program. The memory 1003 is, for example, a semiconductor memory, and is used as a working area of the CPU 1001.

A storage medium driver 1004 accesses a portable storage medium 1005 according to the instruction of the CPU 1001. The portable storage medium 1005 includes a semiconductor device (IC card, etc.), a medium (floppy disk, magnetic tape, etc.) to/from which information is input/output by a magnetic action, and a medium (optical disk, etc.) to/from which information is input/output by an optical action. A communication controlling device 1006 transmits/receives data to/from a network according to the instruction of the CPU 1001.

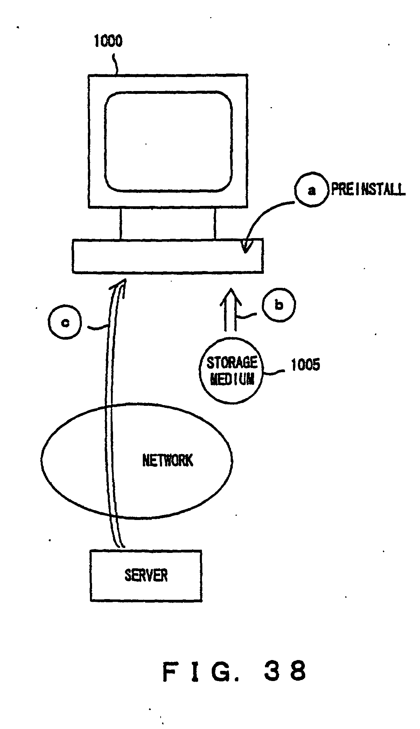

Fig. 38 explains the method providing the software program, etc. according to the present invention. The program according to the present invention is provided with any of the following three methods.
(a) Installed on a computer 1000 and provided. The program, etc. are preinstalled, for example, prior to shipment in this case.
(b) Stored in a portable storage medium and provided. The program, etc. stored in the portable storage medium 1005 are fundamentally installed in the storage device 1002 via the storage medium driver 1004 in this case.
(c) Provided from a server on a network. Fundamentally, the computer 1000 downloads the programs, etc. stored in the server, so that the program, etc. are obtained in this case.

As described above, according to the present invention, a menu is displayed in an order from "an object to a predicate" or in an order from "a predicate to an object", whereby it becomes easy to grasp the entire structure of a menu, and user operations are made uniform. Besides, menu hierarchies are made even, so that an easy-to-use menu is realized.

Additionally, according to the present invention, a menu of "an object to a predicate" type, and a menu of "a predicate to an object" type are prepared, and one of the menus, which is selected by a user, is displayed. As a result, one operation can be selected from either of an object and a predicate according to a user desire, thereby realizing an easy-to-use menu.

Furthermore, according to the present invention, a menu item for specifying an arbitrary process with just one operation can be easily generated and registered even for a frequently used process or a process to be performed in a hurry, which conventionally requires the procedure for selecting menu items from respective hierarchical menus one by one while sequentially opening the menus, leading to a convenience.

Still further, according to the present invention, a menu suitable for each user can be displayed, thereby improving user operability.

### Industrial Applicability

The present invention is widely applied to electronic devices such as a computer, audio equipment, video equipment, telecommunications gear, etc. in addition to a car navigation system.

## Claims

1. An electronic processing device having a menu interface, comprising:
displaying means for displaying an object menu including one or more objects as selectable menu items;
selecting means for selecting an object from the object menu displayed by said displaying means; and
managing means for making said displaying means display one or more predicates corresponding to the object selected by said selecting means as selectable menu items.

2. The electronic processing device according to claim 1, wherein
said managing means manages a correspondence between each object belonging to the object menu and a predicate corresponding to each object.

3. An electronic processing device having a menu interface, comprising:
displaying means for displaying a predicate menu including one or more predicates as selectable menu items;
selecting means for selecting a predicate from the predicate menu displayed by said displaying means; and
managing means for making said displaying means display one or more objects corresponding to the predicate selected by said selecting means as selectable menu items.

4. The electronic processing device according to claim 3, wherein
said managing means manages a correspondence between each predicate belonging to the predicate menu and an object corresponding to each predicate.

5. An electronic processing device having a menu interface, comprising:
displaying means for displaying a noun menu including one or more nouns as selectable menu items;
selecting means for selecting a noun from the noun menu displayed by said displaying means; and
managing means for making said displaying means display one or more verbs corresponding to the noun selected by said selecting means as selectable menu items.

6. An electronic processing device having a menu interface, comprising:
displaying means for displaying a verb menu including one or more verbs as selectable menu items;
selecting means for selecting a verb from the verb menu displayed by said displaying means; and
managing means for making said displaying means display one or more nouns corresponding to the verb selected by said selecting means as selectable menu items.

7. An electronic processing device having a menu interface, comprising:
switching means for instructing a first display mode or a second display mode;
displaying means for displaying an object menu including one or more objects as selectable menu items if the first display mode is instructed by said switching means, and for displaying a predicate menu including one or more predicates as selectable menu items if the second display mode is instructed by said switching means;
selecting means for selecting a menu item from the object menu or the predicate menu displayed by said displaying means; and
managing means for making said displaying means display one or more predicates corresponding to an object selected by said selecting means as selectable menu items in the first display mode, and for making said displaying means display one or more objects corresponding to a predicate selected by said selecting means in the second display mode.

8. The electronic processing device according to claim 7, wherein
a first switch button for switching a display mode from the first display mode to the second display mode is arranged in the object menu, and a second switch button for switching the display mode from the second display mode to the first display mode is arranged in the predicate menu, and wherein
said switching means instructs the display mode according to a selection of the first switch button or the second switch button.

9. The electronic processing device according to claim 7, wherein
said displaying means displays a selection menu for selecting the first displaymode or the second display mode, and wherein
said switching means instructs a display mode by using the selection menu.

10. An electronic processing device having a menu interface, comprising:
managing means for managing menu data defining a configuration of a hierarchical menu;
displaying means for displaying a menu according to the menu data managed by said managing means;
selecting means for selecting menu items from a plurality of hierarchies; and
registering means for registering to the menu data a menu item defined by a combination of the menu items selected by said selecting means.

11. The electronic processing device according to claim 10, further comprising
deleting means for deleting the menu item registered by said registering means from the menu data managed by said managing means.

12. The electronic processing device according to claim 11, wherein
said registering means determines whether or not to register to the menu data the menu item defined by the combination of the menu items selected by said selecting means according to an interaction process, and wherein
said deleting means determines whether or not to delete the menu item registered by said registering means from the menu data according to an interaction process.

13. The electronic processing device according to claim 10, wherein
said registering means determines whether or not to register to the menu data the menu item defined by the combination according to use states of the menu items selected by said selecting means.

14. The electronic processing device according to claim 11, wherein
said deleting means determines whether or not to delete the menu item registered by said registering means from the menu data based on attributes of registered menu items.

15. An electronic processing device having a menu interface, comprising:
managing means for managing menu data defining a configuration of a menu corresponding to a category to which a user belongs;
obtaining means for obtaining a category to which a user belongs;
identifying means for identifying a menu corresponding to the category obtained by said obtaining means from among the menu data managed by said managing means; and
displaying means for displaying the menu identified by said identifying means.

16. A method providing a menu interface, comprising:
displaying an object menu including one or more objects as selectable menu items;
selecting an object from the object menu; and
displaying one or more predicates corresponding to the selected object as selectable menu items.

17. A method providing a menu interface, comprising:
displaying a predicate menu including one or more predicates as selectable menu items;
selecting a predicate from the predicate menu; and
displaying one or more objects corresponding to the selected predicate as selectable menu items.

18. A method providing a menu interface, comprising:
managing menu data defining a configuration of a hierarchical menu;
displaying a menu according to the menu data;
selecting menu items from a plurality of hierarchies; and
registering to the menu data a menu item defined by a combination of the selected menu items.
